# EUROPÄISCHE PATENTSCHRIFT

(11) **EP 1 960 751 B1**
(45) Veröffentlichungstag und Bekanntmachung des Hinweises auf die Patenterteilung: **16.09.2009**
(21) Anmeldenummer: 07721893.1
(22) Anmeldetag: 07.02.2007
(51) Int. Cl.: G01K 1/14

(54) **FLEXIBLE THERMOELEKTRISCHE VERTIKALMESSLANZE**
FLEXIBLE THERMOELECTRIC VERTICAL MEASURING PROBE
LANCE DE MESURE THERMOÉLECTRIQUE VERTICALE ET SOUPLE

(30) Priorität: 21.12.2006 DE 102006060647
(43) Veröffentlichungstag der Anmeldung: 27.08.2008
(73) Patentinhaber: Temperaturmesstechnik Geraberg GmbH, 98693 Martinroda (DE)
(72) Erfinder: IRRGANG, Klaus, 98716 Geraberg (DE); KÄMPF, Hartmut, 99338 Angelroda (DE); SCHÄTZLER, Klaus-Dieter, 98716 Geraberg (DE); HEINZ, Andreas, 98716 Geschwenda (DE); HOLLAND-MORITZ, Michael, 98693 Unterpörlitz (DE)
(74) Vertreter: Liedtke, Klaus
(86) Internationale Anmeldenummer: PCT/DE2007/000224
(87) Internationale Veröffentlichungsnummer: WO 2008/074276

(56) Entgegenhaltungen:
- WO-A-02/088649
- US-B1- 6 455 781

## Beschreibung

Die Erfindung betrifft eine flexible thermoelektrische Vertikalmesslanze mit Thermodrähten, die durch aneinander gereihte Kapillarstück-Segmente geführt sind und die an mindestens einer Stelle zu einem Thermoelement verschweißt sind.

In der Halbleiterindustrie werden Wafer eingesetzt, deren Temperatur mit geraden, aber auch mit flexiblen thermoelektrischen Temperaturlanzen gemessen werden. Die Temperaturlanzen enthalten meist drei bis fünf Thermopaare, die die Temperatur im Wafer an verschiedenen Punkten messen. Aus technologischen Gründen kommen in den neueren Wafern vorwiegend flexible Vertikalmesslanzen zum Einsatz. Bei den flexiblen Vertikalmesslanzen sind die Thermodrähte in kurzen Keramiksegmenten (siehe z.B. US 6 455 781) bzw. kurzen keramischen Mehrloch-Kapillarstücken geführt. An den Messstellen bestehen Einschleifungen, in denen Thermoelemente eingelagert sind. Als Keramik wird im Allgemeinen hochreines Aluminiumoxid verwendet, das sicherstellt, dass keine Fremdstoffe in den Platindraht eindiffundieren. Nachteilig ist dabei, dass bei der mechanischen Bearbeitung der Keramikstücke Abriebelemente der Trennscheibe in die Keramik eingetragen werden, die beim Einsatz der Messlanzen zur Drift der Platinelemente und u. U. auch zu Rekristallisationseffekten im Hüllrohr führen. Ein weiters Problem besteht beim Einführen der flexiblen Vertikalmesslanzen. Die Biegung der Segmente bewirkt, dass die außen liegenden Platindrähte wesentlich stärker gestreckt werden als die innen liegenden. Ferner tritt beim Einfädeln Abrieb am Quarzhüllrohr des Wafers auf. Da die Keramiksegmente äußerst hart sind, kann auch durch Kollern nur ein mäßiges Abrundungen der scharfen Außenkanten erreicht werden. Durch ein weiteres Beschleifen der Keramiksegmente, insbesondere der Außenkanten, kann zwar eine Verbesserung der Biegbarkeit erreicht werden, jedoch ist dann eine anschließende Reinigung unumgänglich. Problematisch bei den Keramiksegmenten ist auch die Rauheit der Innenwände der Kapillarlöcher. Bei ungünstigen Einbaukonstellationen kann sich der Platindraht beim Erwärmen in einem untenliegenden Keramiksegment festhaken. Der zugehörige partnerliche Thermodraht (z. B. PtRh10) könnte jedoch beim Erwärmen bzw. beim Ausdehnen eine Verhakungsstelle im oberen Teil der Lanze aufweisen. Aufgrund derartiger versetzter Festpunktsituationen können bei thermischen Ausdehnungen unterschiedliche Zugkräfte in den Platinschenkeln auftreten, die sich in der sogenannten Schlaufenbildung beweglicher Vertikalmesslanzen äußert.

Aus WO 02/088649 A ist eine thermoelektrische Vertikalmesslanze mit Thermodrähten bekannt, die zu einem Thermoelement verschweiβt sind. Die Thermodrähte sind in einer starren Hülse geführt, so dass die Vertikalmesslanze nicht gebogen werden kann.

Der Erfindung liegt die Aufgabe zugrunde, eine Vertikalmesslanze der eingangs genannten Art anzugeben, die eine hohe Biegbarkeit und ein hohe Lebensdauer aufweist und sich durch geringen Herstellungs- und Montageaufwand auszeichnet.

Die Aufgabe wird erfindungsgemäß mit einer Vertikalmesslanze gelöst, welche in die im Anspruch 1 angegebenen Merkmale aufweist.

Vorteilhafte Ausgestaltungen sind in den Unteransprüchen angegeben. Gegenstand der Anmeldung sind auch Merkmalskombinationen bei denen die beschriebenen Einzelmerkmale beliebig miteinander kombiniert werden.

Die Thermodrahtführungssegmente bestehen aus Quarzglas, die unterschiedliche Längen besitzen können, wobei für die Segmente, die die Messperlen enthalten, größere Längen verwendet werden. Die Quarzglassegmente weisen mehrere Kapillarlöcher auf.

Eine vorteilhafte Ausführung sieht vor, dass die Quarzglassegmente ein zylindrisches Kapillarloch als zentrale Öffnung aufweist und äußere Kapillarlöcher konzentrisch um die zentrale Öffnung angeordnet sind.

Eine vorteilhafte Ausführung sieht vor, dass die Segmente ovale Öffnungen aufweisen, wobei die Längsachse des Ovals zur Segmentmitte zeigt. Die Quarzglassegmente weisen im Inneren einen freien Durchmesser auf, d. h. sie sind hohl gestaltet und damit leichter als vergleichbare Keramiksegmente.

Die Quarzglassegmente können an den Stirnseiten jeweils überflammt werden. Die Überflammung bewirkt ein Schmelzen der Außen- und Innenkanten, wodurch die Rauheit wesentlich verbessert wird. Die überflammten und damit etwas zurück geschmolzenen Außenkanten ermöglichen einen wesentlich kleineren Biegeradius einer Quarzglassegmentkette gegenüber den Keramikausführungen. Beim Einführen der Quarzglassegmentkette in das Quarzglasmessrohr des Wafers entsteht auch nicht der Abrieb, der sonst zwischen Keramik und Quarzglas auftritt. Die überflammten Segmente gestatten das Einfädeln in einen Zug, so dass sich die Montagezeit um ein Mehrfaches verringert. Die geringere Rauheit in den ovalen Innenbohrungen gestattet auch eine bessere Montage der Platindrähte. Dadurch, dass die Segmente nicht mehr mit einer Trennscheibe getrennt werden müssen, entfällt das Einbringen von Fremdstoffen, die von der Trennscheibe in das Keramikmaterial unweigerlich wandern. Somit kommt es zu einer höheren Lebensdauer und geringeren Drift der Platinelemente. Der durch die abgeflammten Kanten ermöglichte geringere Biegeradius verhindert auch das Auftreten von unnatürlichen Streckungen der Platindrähte in den Außenbahnen beim Einfädeln, und führt so zu einer verlängerten Lebensdauer der quarzglasgeführten Thermoelemente.

Das Quarzglassegment, das sich an der Endstelle der Messlanze befindet, enthält ein Thermoelement, welches in der zentralen Öffnung des Quarzglassegmentes angeordnet ist. Das Quarzglassegment ist mit radialen Schlitzen versehen, mit denen der Kontakt des Umgebungsmediums zum Thermoelement verbessert wird.

Innerhalb der Messlanze sind Messstellen angeordnet, bei denen sich ein Thermoelement in der zentralen Öffnung eines Quarzglassegmentes befindet. Bei diesen Quarzglassegmenten wird die Zufuhr des Umgebungsmediums zum Thermoelement dadurch erleichtern, dass es mit seitlichen Einschliffen versehen ist.

Zur Markierung der Messpunkte können die Quarzglassegmente für die Messstelle und/oder die Quarzglassegmente für die Endstelle farblich behandelt und/oder mit einer mattierten Oberfläche versehen werden.

Die Erfindung wird im Folgenden anhand eines Ausfuhrungsbeispieles näher erläutert.

In den zugehörigen Zeichnungen zeigen:
- Figur 1: die Gesamtdarstellung einer Vertikalmesslanze,
- Figur 2: ein einzelnes Quarzglassegment im Querschnitt,
- Figur 3: ein einzelnes Quarzglassegment im Längsschnitt,
- Figur 4: die Endstelle der Messlanze,
- Figur 5: die Draufsicht auf ein Quarzglassegmentes für eine Messstelle in- nerhalb der Messlanze und
- Figur 6: die Seitenansicht eines Quarzglassegmentes für eine Messstelle innerhalb der Messlanze.

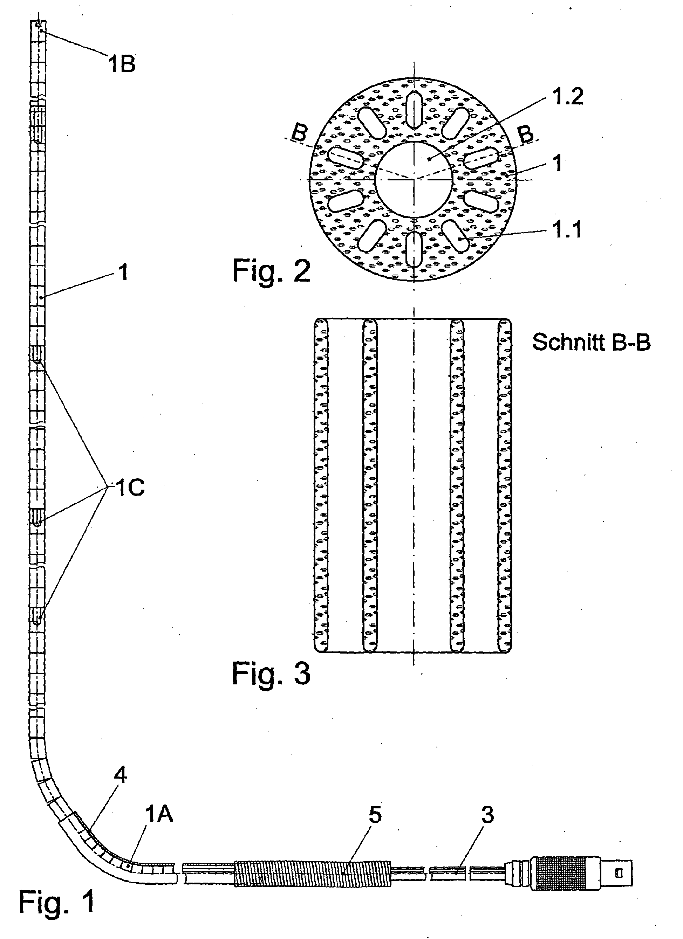

Die in **Figur 1** dargestellte Vertikalmesslanze besteht aus ca. 100 Qarzglassegmenten 1, in denen bis zu fünf Platinthermoelemente 2 angeordnet sind. Ein Platinthermoelement 2 befindet sich am vorderen Ende in einem speziellen vorderen Quarzglassegment 1B. Weitere Platinthermoelemente 2 sind innerhalb der Messlanze in Messstellensegmenten 1C angebracht. Im Bereich der stärksten Biegung der Messlanze befinden sich verkürzte Quarzglaselemente 1A. Die Messlanze endet am Kabelanschluss 3. In diesem Endbereich ist die Messlanze mit einem Führungsrohr 4 aus VA-Stahl und einer Knickschutzfeder 5 geschützt.

**Die** **Figuren 2 bis 6** erläutern den Aufbau eines Quarzglassegmentes 1.

Aus der in Figur 2 dargestellten Draufsicht sind die im Randbereich angeordneten zehn äußeren Kapillarlöcher 1.1, die hier als ovale Öffnungen ausgeführt sind, und die zentrale Öffnung 1.2 ersichtlich. Die zentrale Öffnung 1.2 weist einen kreisförmigen Querschnitt auf.

**Figur 3** zeigt einen Längsschnitt in der Achse B-B durch das Quarzglassegment 1. Die Quarzglassegmente 1 weisen vorzugsweise eine Länge von 7 mm auf. Die Kanten der Quarzglaselemente 1 werden bei der Segmentherstellung überflammt, so dass sich leichte Abrundungen ergeben.

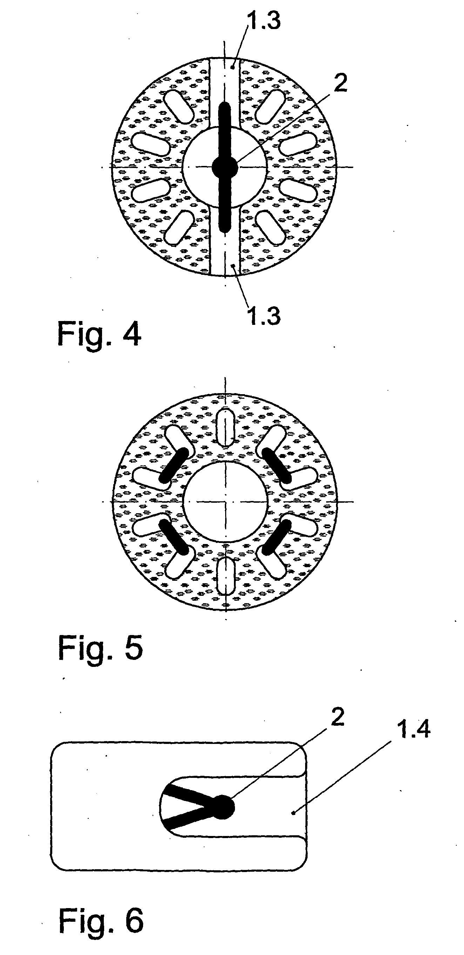

In **Figur 4** ist die Draufsicht auf die Endstelle der Messlanze dargestellt. Die Thermoelement 2 befindet sich in der zentralen Öffnung 1.2. Das Quarzglassegment 1 ist mit radialen Schlitzen 1.3 versehen, die den ungehinderten Zutritt des Umgebungsmediums zum Thermoelement 2 ermöglichen. Das Abschlusselement 2 am Kopf der Vertikalmesslanze ist in einem überflammten Senkschliff geschützt angeordnet.

In **Figur 5** ist ein Quarzglassegment 1 für eine Messstelle innerhalb der Messlanze dargestellt. Dieses Segment ist mit einem aus Figur 6 ersichtlichen seitlichen Einschliff 1.4 versehen. Die Quarzglassegmente 1, an denen sich die zu Thermoelementen 2 verschweißten Thermodrähte befinden, sind mit einer größeren Länge von ca. 10 mm ausgeführt. Die seitlichen Schliffe werden so geführt, dass das Thermoelement 2 der Thermopaare dort sicher lagern kann. Durch Überflammen dieser Einschleifungen wird verhindert, dass die Thermoelemente 2 an scharfen Kanten der Quarzglassegmente 1 reiben.

### BEZUGSZEICHENLISTE

- 1: Quarzglassegment
1.1 Äußeres Kapillarloch
1.2 Zentrale Öffnung
1.3 Radialer Schlitz
1.4 Seitlicher Einschliff
1A verkürztes Quarzglassegment
1B Vorderes Segment
1C Segment für Messstelle
- 2: Thermoelement
- 3: Kabelanschluss
- 4: Führungsrohr
- 5: Knickschutzfeder

## Patentansprüche

1. Flexible thermoelektrische Vertikalmesslanze mit Thermodrähten, die durch aneinander gereihte Kapillarstück-Segmente geführt sind und die an mindestens einer Stelle zu einem Thermoelement (2) verschweißt sind, **dadurch gekennzeichnet, dass** die Kapillarstück-Segmente aus Quarzglassegmenten (1) bestehen und mehrere parallel zur Längsachse verlaufende Kapillarlöcher aufweisen, wobei ein Kapillarloch als zentrale Öffnung (1.2) ausgeführt ist und äußere Kapillarlöcher (1.1) konzentrisch um die zentrale Öffnung (1.2) angeordnet sind und am vorderen Ende ein Platinthermoelement (2) in einem speziellen Quarzglassegment (1B) befindet.

2. Vertikalmesslanze nach Anspruch 1, **dadurch gekennzeichnet, dass** die Quarzglassegmente (1) an ihren Stirnflächen mit abgerundeten Rändern versehen sind, die durch Überflammen erzeugt wurden.

3. Vertikalmesslanze nach Anspruch 1 oder 2, **dadurch gekennzeichnet, dass** die äußeren Kapillarlöcher (1.1) oval oder als Langlöcher ausgebildet sind.

4. Vertikalmesslanze nach Anspruch 3, **dadurch gekennzeichnet, dass** die Hauptachse des Querschnitts der äußeren Kapillarlöcher (1.1) zur Mittelachse des Quarzglassegmentes (1) weist.

5. Vertikalmesslanze nach einem der vorhergehenden Ansprüche, **dadurch gekennzeichnet, dass** sich an der Endstelle der Messlanze ein Thermoelement (2) befindet, welches in der zentralen Öffnung (1.2) eines Quarzglassegmentes (1) angeordnet ist, wobei das Quarzglassegment (1) mit radialen Schlitzen (1.3) versehen ist, die die Zufuhr des Umgebungsmediums zum Thermoelement (2) erleichtern.

6. Vertikalmesslanze nach einem der Ansprüche 1 bis 4, **dadurch gekennzeichnet, dass** innerhalb der Messlanze Messstellen angeordnet sind, bei denen ein Thermoelement (2) in der zentralen Öffnung (1.2) eines Quarzglassegmentes (1) angeordnet sind, welches mit seitlichen Einschliffen 1.4 versehen ist, die die Zufuhr des Umgebungsmediums zum Thermoelement (2) erleichtern.

7. Vertikalmesslanze nach einem der vorhergehenden Ansprüche, **dadurch gekennzeichnet, dass** die Quarzglassegmente (1) für die Messstelle (1C) und/oder die Quarzglassegmente (1) für die Endstelle farblich behandelt sind und/oder ihre Oberfläche mattiert ist.

## Claims

1. Flexible thermoelectric vertical sensor lance having thermoelectric wires guided by capillary piece segments which are lined up in a row and which are welded to form a thermocouple (2) in at least one position, **characterized in that** the capillary piece segments consist of silica glass segments (1) and present several capillary holes which run in parallel to the longitudinal axis, where one capillary hole is designed as a central opening (1.2) and external capillary holes (1.1) are arranged concentrically around the central opening (1.2) and a platinum thermocouple (2) is located in a special silica glass segment (1B) at the front end.

2. Vertical sensor lance as claimed in claim 1, **characterized in that** the silica glass segments (1), at their end surfaces, are provided with rounded edges which have been created by flame application.

3. Vertical sensor lance as claimed in claim 1 or 2, **characterized in that** the outer capillary holes (1.1) are either oval or designed as elongated holes.

4. Vertical sensor lance as claimed in claim 3, **characterized in that** the main axis of the cross-section of the outer capillary holes (1.1) points to the centre line of the silica glass segment (1).

5. Vertical sensor lance as claimed in any preceding claim, **characterized in that** one thermocouple (2) is located at the end position of the sensor lance and in the central opening (1.2) of a silica glass segment (1) where the silica glass segment (1) has radial slots (1.3) which allow the easier feeding of the surrounding medium to the thermocouple (2).

6. Vertical sensor lance as claimed in any claim 1 through 4, **characterized in that**, inside the sensor lance, measuring points are arranged at which one thermocouple (2) is located in the central opening (1.2) of a silica glass segment (1) which is provided with lateral countersinks 1.4 which allow the easier feeding of the surrounding medium to the thermocouple (2).

7. Vertical sensor lance as claimed in any preceding claim, **characterized in that** the silica glass segments (1) for the measuring point (1C) and/or the silica glass segments (1) for the end position have a colour treatment and/or have a mat surface finish.

## Revendications

1. Sonde de mesure thermoélectrique verticale flexible avec des fils pour couples thermoélectriques passés au travers de segments d'unités capillaires alignés les uns à côté des autres et soudés au moins à un endroit pour former un thermoélement (2), **caractérisée en ce que** les segments d'unités capillaires sont composés de segments en verre de silice (1) et comportent plusieurs trous capillaires s'étendant parallèlement à l'axe longitudinal, un trou capillaire étant prévu comme ouverture centrale (1.2) et des trous capillaires extérieurs (1.1) étant disposés concentriquement autour de l'ouverture centrale (1.2), et un thermoélement en platine (2) se trouvant dans un segment de verre de silice spécifique (1B) à l'extrémité avant.

2. Sonde de mesure verticale selon la revendication 1, **caractérisée en ce que** les segments en verre de silice (1) sont pourvus de bords arrondis sur leurs faces frontales, lesquels sont générés par flambage.

3. Sonde de mesure verticale selon la revendication 1 ou la revendication 2, **caractérisée en ce que** les trous capillaires extérieurs (1.1) sont prévus ovales ou en forme de trous oblongs.

4. Sonde de mesure verticale selon la revendication 3, **caractérisée en ce que** l'axe principal de la section transversale des trous capillaires extérieurs (1.1) est dirigé vers l'axe central du segment en verre de silice (1).

5. Sonde de mesure verticale selon l'une des revendications précédentes, **caractérisée en ce qu'**un thermoélement (2) se trouve en position terminale de la sonde de mesure, lequel est disposé dans l'ouverture centrale (1.2) d'un segment en verre de silice (1), ledit segment en verre de silice (1) étant pourvu de fentes radiales (1.3) facilitant le transport du milieu ambiant vers le thermoélement (2).

6. Sonde de mesure verticale selon l'une des revendications 1 à 4, **caractérisée en ce que** des points de mesures sont disposés à l'intérieur de la sonde de mesure, où un thermoélement (2) est disposé dans l'ouverture centrale (1.2) d'un segment en verre de silice (1) pourvu d'excavations latérales 1.4 facilitant le transport du milieu ambiant vers le thermoélement (2).

7. Sonde de mesure verticale selon l'une des revendications précédentes, **caractérisée en ce que** les segments en verre de silice (1) pour le point de mesure (1C) et/ou les segments en verre de silice (1) pour la position terminale sont colorés et/ou **en ce que** leur surface est dépolie.
